# EUROPEAN PATENT SPECIFICATION

(11) **EP 4 192 387 B1**
(45) Date of publication and mention of the grant of the patent: **26.08.2026**
(21) Application number: 21777533.7
(22) Date of filing: 16.09.2021
(51) Int. Cl.: A61C 1/07, A61C 1/14, A61C 17/20

(54) **TOOL TIP, TOOL FOR DENTAL TREATMENT HAVING SUCH A TOOL TIP**
WERKZEUGSPITZE, WERKZEUG ZUR ZAHNBEHANDLUNG MIT SOLCH EINER WERKZEUGSPITZE
POINTE D'OUTIL, OUTIL DE TRAITEMENT DENTAIRE DOTÉ D'UNE TELLE POINTE D'OUTIL

(30) Priority: 18.09.2020 EP 20196943
(43) Date of publication of application: 14.06.2023
(73) Proprietor: Ferton Holding S.A., 2800 Delémont (CH); University of Bern, 3007 Bern (CH); Berner Fachhochschule, 2502 Biel/Bienne (CH)
(72) Inventor: HOFMANN, Martin, 3008 Bern (CH); BURGER, Jürgen, 2563 Ipsach (CH); NIEDERHAUSER, Thomas, 3173 Oberwangen b. Bern (CH); WENGER, Dominik, 3053 Münchenbuchsee BE (CH); STUTZER, Diego, 2503 Biel (CH); EICK, Sigrun, 3065 Bolligen (CH); BIENAIMÉ, Alex, 39220 Les Rousses (FR); FOURNIER, Maxime, 1010 Lausanne (CH)
(74) Representative: Müller Schupfner & Partner Patent- und Rechtsanwaltspartnerschaft mbB (Muc)
(86) International application number: PCT/EP2021/075513
(87) International publication number: WO 2022/058441

(56) References cited:
- CN-A- 110 859 680
- DE-A1- 2 219 657
- KR-B1- 101 491 710
- US-A1- 2009 069 830
- US-A1- 2018 078 268

## Description

The present invention concerns a tool tip, a tool for a dental treatment and a method for operating such a tool.

In order to keep ones natural teeth as long as possible and to prevent caries and periodontal infections, home-care methods like brushing ones teeth and flossing are essential. Unfortunately, these alone are not sufficient. Biofilm arises even if homecare treatments are performed correctly and can lead to calculus formation and more serious diseases like periodontitis. Regular visits to a dentist are necessary for diagnosing the formation of biofilm or calculus and applying preventive techniques to neutralize their growth. Air-polishing technology, like AirFlow^{®}, is the new reference for biofilm removal according to the Guided Biofilm Therapy^{®} method, however, there is still a limitation for calcified calculus.

Scaling technologies provide greater efficiency for these cases. For scaling technology, the world's most commonly used technique is manual removal with a curette, using a cutting blade to detach the calculus from the teeth. This treatment is tiring for the operator as long-term musculoskeletal disorders may occur, and it is invasive due to the sharp active edge of the tool and can lead to tooth damage.

To overcome this issue, powered scalers have been developed that uses the efficiency of a high-frequency mechanical vibration to remove the calculus by a hammering motion. In addition, they produce less operator wrist fatigue than hand scaling. The main challenge is to obtain an efficient treatment with minimal impact on teeth, to access all narrow areas, to be ergonomic for the operator and to avoid the generation of unpleasant, parasitic effects like emitted sound or tangible vibrations.

The state of the art knows airscalers, magnetostrictive and piezoelectric scalers, which have been continuously improved in the past.

For improving prophylaxis and simplifying treatment, several developments have been performed to optimize piezoelectric scalers, for instance. For example, straight, non-bended tool tips have been developed for mounting them to a motional part, being actuated by a vibration source. The vibration source is typically formed by ring shaped piezo elements, which are stacked above each other. A horn, being connected to the stack of piezo elements on the one side and to the tool tip on the other side, transfers the motion of the vibration source to the tool tip.

Even if the new configuration is able to provide better performance with better ergonomics, the system remains composed of many costly parts, i.e. that a complex assembly process must also be applied. In addition, the assembly induces many interfaces and contact areas, which leads to ultrasonic wave reflections (losses) and unsuitable effects such as noise generation. Ultimately the system remains lossy and high performance or smart control algorithm could not be applied. Furthermore, the special shape of the scaler tip challenges the vibrational drive of the tool tip, since the shape is prone for parasitic vibration such that the vibrational movement caused by the vibration source cannot be effectively transferred to an oscillation at the distal end of the pointed tip of the tool tip.

CN 110 859 680 A deals with the technical field of oral cleaning devices, in particular an ultrasonic tooth cleaning device, which comprises a tool head and an ultrasonic transducer fixedly connected with the tool head. US 2018 078 268 A1 relates to ultrasonic surgical instruments designed for cutting and coagulating organic tissue.

Considering above, it is an object of the present invention to provide a tool having an improved efficiency of transferring the vibrational movement of the vibration source to the oscillation of the distal end of the pointed tool tip and having improved ergonomics, compared to the tools for dental treatments known in the prior art.

The object is achieved by a tool tip including the features of claim 1, a tool including the features of claim 9 and a method including the features of claim 15. Further embodiments are described in the dependent claims, the description and the figures.

According to a first aspect of the present invention a tool tip for a tool being intended for a dental treatment, in particular for a piezoelectric scaler, is provided, comprising
- a first section extending in a first direction and
- a second section extending in a second direction, the second direction being inclined relative to the first direction, wherein the first section has at least partially a flat basic body.

Contrary to the state of the art, it is provided according to the present invention that the first section of the tool tip is partially a flat basic body. This allows realizing a flat transducer, being formed by integrating the first section into vibration source. Preferably, the term "integrated" means that at least the first section of the tool tip is part of a vibration source, i. e. transducer, which transfers the electric energy to a vibrational movement. According to the invention, the design of a flat basic body supports a planner bending motion of the second section, namely of the distal end of the tool tip. As a consequence, two resonators are coupled (one in flexural motion in the second section and one longitudinal motion).

According to another aspect of the present invention, a tool for dental treatment, in form of a piezoelectric scaler, is provided, comprising
- a handpiece having a vibration source, preferably having a first piezo element and a second piezo element, and
- a tool tip, in particular the tool tip according to the invention,

wherein the tool tip
-- is actuated by the vibration source in an operation status of the tool and
-- comprises a first section extending in a first direction and a second section extending in a second direction, the second direction being inclined relative to the first direction, wherein the first section is partially integrated in the vibration source, preferably between the first piezo element and the second piezo element, and has at least partially a flat basic body. All specifics and benefits being in the following discussed for the tool tip applies analogously for the tool and vice versa.

Despite the two coupled resonators it turned out that parasitic motion can be reduced by using a flat transducer. Therefore, using a tool tip, having a first section being at least partially integrated into the vibration source and having at least partially a flat basic body, increases the efficiency of transferring the originally actuated vibration movement to the distal end of the pointed tip of the tool tip in the second section, in particular for such tool tips having a first section and a second section, the second section direction being inclined relative to the first section direction. Moreover, it turned out that the tool remains in a proper resonance during operation and the vibrational behaviour at the output can be ensured, for example by an electronic driver closed loop control, although two resonators are coupled in such systems. Further, there is no additional horn needed, which is otherwise located at a distal front end of a stack formed by ring-shaped piezo elements of the vibration source, i. e. there is no additional component needed to form the horn, since the horn is included in the tool tip. Instead, the first section is integrated, preferably inserted, into the vibration source. As a consequence, a length of the tool can be reduced, which simplifies the handling of the tool for dental treatment.

In particular, the tool for dental treatment is a piezoelectric scaler having a scaler tip, being formed in the second section of the tool tip according to the invention. Such a scaler is intended to remove calculus and/or biofilms during treatment. During treatment, the tool is in an operation status, in which the tool tip performs a vibrational movement. In particular, it is provided that the vibrational movement is actuated by the vibration source. As a result, a movement along the first direction is transferred to an oscillation movement of the distal end of the pointed tool tip of the second section, the oscillation movement being preferably perpendicular to the second direction, along which the tool tip extends in the second section. The amplitude of the oscillation movement of the distal end of the tool tip reaches values up to 200 µm. According to the inventoin, the vibration source causes a vibration movement having a frequency between 18 kHz and 60 kHz, preferably between 20 kHz and 40 kHz and more preferably between 25 kHz and 35 kHz. In particular, it is provided that the first section is completely formed as a flat basic body. Furthermore, the handpiece includes a housing, which surrounds the vibrational source and at least partially the tool tip. In particular, it is provided that the second section protrudes from a distal front end of the housing for performing the dental treatment.

Preferably, a horn is included in the tool tip. The horn is preferably formed as part of the first section, the part tapering. Thus, the tapering section can amplify the oscillating motion being transferred via the tapering part from the flat body to the second section.

According to a preferred embodiment of the present invention, the vibration source comprises a first plate and a second plate for forming a longitudinal resonator, which actuates the tool tip in the operation status, the first section being at least partially sandwiched between the first plate and the second plate. In particular, the first plate and the second plate are piezoelectric plates. Preferably, the first plate and the second plate are orientated parallel to each other and are spaced from each other in a direction being perpendicular to the main extension planes of the first plate and the second plate. By using such a design for the longitudinal resonator, it is possible to transfer the electrical energy to the first section and as a consequence to the tool tip, causing a vibrational movement of the first section inside the longitudinal resonator along a direction parallel to the first direction. As a consequence, a flat transducer is realised, which transforms an electrical energy being supplied to the tool to a vibrational movement of the tool tip.

According to the invention, the first section and the second section form an integral body. Contrary to the state of the art, any kind of interface or connection between the vibration source and the distal end of the tool tip is avoided. As a result, losses due to ultrasonic wave reflections can be avoided and the efficiency of transferring the vibrational movement of the vibration source to the oscillation movement at the distal end of the tool tip can be improved. According to the invention, the term "integral" means that the first section and second section origin from the same piece of material and there is no possibility to separate the first section and the second section without destroying the tool tip.

Preferably, it is provided that a cross section of the flat basic body of the first section, in a plane perpendicular to the first direction, has a first extension and a second extension perpendicular to the first extension, wherein a ratio between the first extension to the second extension is smaller than 0.3, preferably smaller than 0.2 and more preferably smaller than 0.1 or even smaller than 0.75. In particular, it is provided that the second extension is parallel to the main extension plane of the first plate and/or second plate. The ratios between the first extension and the second extension as described above defines a flat basic body.

Especially, the first extension is between 0.5 and 2 mm, preferably between 0.7 and 1.5 mm and most preferably between 0.8 and 1.2 mm or about 1 mm, while preferably the second extension is between 2 and 20mm, more between 5 and 15 mm and most preferably between 8 and 10 mm or about 9 mm.

In particular, the second extension and the second direction of the second section are located in the same plane. Such an orientation of the second section relative to the second extension supports effective transferring the vibration movement to the oscillation at the pointed tool tip. Preferably, the plane, through which the second direction and the second extension extend, is mainly parallel to the first plate and/or second plate of the vibration source.

In particular, it is provided that the tool tip is made from titanium or stainless steel. The titanium and stainless steel allow a high mechanical strength and modulus, ductility and acoustic transmission. The first plate and the second plate are probably made of a piezo electrical material, probably polycrystalline and more preferably a hard lead zirconate titanate, in particular PZT-4 or PZT-8.

Furthermore, the first plate and the second plate are preferably configured to actuate in a d₃₁ transverse mode in the longitudinal resonator. As a consequence, it is avoided to use the d₃₃ mode, which is used by the vibrational sources, being formed by the ring-shaped piezo elements, which are stacked above each other. In particular, it turned out that by using such a flat transducer it is possible to remain a proper resonance during operation and it is even possible to ensure the desired vibrational behaviour at the output, namely at the distal end of the pointed tool tip, due to an electronic drive having a closed loop control. Such an electronic drive can be used in case of a flat transducer. Furthermore, it is conceivable to use the d₁₅ mode i. e. a mode using the d₁₅ piezoelectric coefficient of the first plate and/or the second plate. Such a specific configuration confers more power.

In particular, it is provided that the tool comprises a control unit, the control unit being configured for controlling the vibrational source. In particular, the control unit is adapted to form an electronic closed loop control for controlling the oscillating movement of the distal end of the tool tip and of the tool tip. Furthermore, it is conceivable to use a feedback signal of the transducer as a sensor to detect what load is applied to the distal end of the tool tip. This allows to differentiate between unloaded operation and different load cases.

In particular, it is provided that a total length of a tool in a direction parallel to the first direction is smaller than 25 cm, preferably smaller than 20 cm and more preferably smaller than 15 cm. Such a tool is smaller than those known from the prior art and simplifies handling of the tool during its operation. In particular, it is possible to reduce the volume and consequently the weight of the tool, improving the ergonomics for a simplified handling of the tool.

It is also conceivable that the tool includes a light source, preferably at the distal end. In particular, at a distal front end of the housing, a light source is incorporated into the housing for illuminating the tooth being treated. This further simplifies the handling of the tool during the treatment.

Furthermore, the first section has a first subsection, being located inside the longitudinal resonator in the operation status and a second subsection, being located outside of the longitudinal resonator, wherein the second extension of the first subsection is larger than the second extension of the second subsection. As a consequence, a transition section is located between the first subsection and the second section. This transition section substitutes the horn, being used in the tool for dental treatment, preferably the piezoelectronic scaler, from the prior art. In particular, it is provided that the second extension tapers along the first direction within the second subsection. In particular, it is intended to use the transition section for an amplified vibration, being in antiphase with the oscillation movement of the first subsection.

In contrast to that, the second extension of the tool tip in the first subsection mainly stays constant. By using a comparably large second extension in the first subsection, it is possible to provide a comparably large area, which interacts with the first plate and the second plate for realizing the vibrational movement. Preferably, it is provided that a ratio of a second second extension in the first subsection to a first second extension in the first subsection has a value between 0.1 and 0.4, preferably between 0.1 and 0.3 and more preferably between 0.1 and 0.25.

The first second extension is preferably between 10 mm and 18 mm, more preferably about 14 mm, and the second second extension is between 0.5 and 4 mm, more preferably about 2 mm.

In particular, the first extension is essentially constant along the first direction, in particular, in a first subsection and/or the second subsection. It is also conceivable that the first extension is only constant in the first subsection, such that the tool tips include a flat basic body only in the first subsection. Realising a tool tip having a constant first extension in the first subsection and the second subsection allows easy manufacturing and avoids any danger of parasitic motions, being caused during the vibration.

In particular, it is provided that an angle between the first direction and the second direction has a value between 100° and 160°, preferably 105° and 140° and more preferably between 110° and 130°. As a consequence, an angle is established that is optimized for an oscillating movement at the distal end of the pointed tool tip and that removes during its oscillation biofilm and calculus from the surface of a tooth.

Furthermore, the tool tip has a protrusion, extending in a direction being parallel to the second extension. The protrusion is especially formed in a border region between the first subsection and the second subsection. The protrusion is located at a vibration node of the transducer (location without vibration), which could be used for transducer fixation because it avoids any damping or undesired effect during operation.

Another aspect of the present invention is a method for operating a tool according to one of the proceeding claims, wherein the tool tip is actuated to perform a vibrational motion having a frequency between 18 kHz and 60 kHz, preferably between 20 kHz and 40 kHz and more preferably between 25 kHz and 35 kHz.

The specifics and benefits being discussed for the tool for dental treatment according to the present invention applies analogously for the method and vice versa.

Wherever not already described explicitly, individual embodiments or their individual aspects and features can be combined or exchanged with one another without limiting or widening the scope of the described invention, whenever such a combination or exchange is meaningful and in the sense of this invention. Advantages, which are described with respect to one aspect of the present invention are, wherever applicable also advantages of other aspects of the present invention.

In the drawings is:
- **Fig. 1**: a tool for a dental treatment according to the state of the art and a vibration source for such a tool in an exploded view,
- **Fig. 2**: a tool according to a preferred embodiment for a tool according to the present invention
- **Fig. 3**: a transducer for a tool according to the present invention.

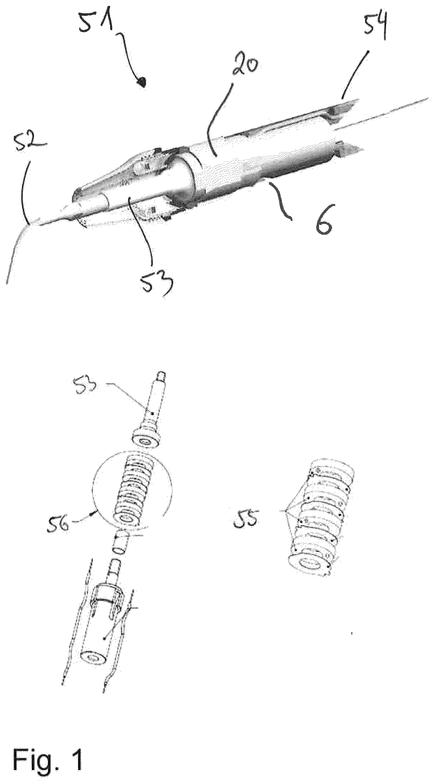

In Figure 1, a tool 51 for a dental treatment according to the state of the art (upper half) and a vibration source for such a tool 51 in an exploded view (lower half) are illustrated. In particular, the tool 51 for dental treatment is a piezoelectric scaler, being used for removing calculus and/or biofilms from a tooth during the dental treatment. The tool 51 comprises a tool tip 52, in particular a scaler tip, and a vibration source 20 for causing a vibrational movement of the tool tip 52. The vibrational movement is intended to create an oscillation at a distal end of the pointed tool tip 52. By locating the distal end of the tool tip 52 at the tooth it is possible during dental treatment to remove the biofilm and/or calculus due to the oscillating movement of the distal end of the tool tip 52. Typically, the tool tip 52 is connected to a vibration source 20, being part of a handpiece, via a horn 53. The horn 53 transfers the vibrational movement from the vibration source 20 to the tool tip 52. In particular, the vibrational source 20 is surrounded by a housing 54 of the handpiece 6.

The vibration source 20, being used in such a tool, typically includes ring-shaped piezo elements 55, the piezo elements 55 being stacked above each other in a direction being parallel to the direction of the vibrational movement, being caused by the vibrational source. In other words, the vibrational source includes a stack 56 of ring-shaped piezo elements 55, being stacked above each other in a direction parallel to the direction of vibrational movement. Typically, the horn 53 is connected to a distal front side of the stack 46, formed by the ring-shaped piezo element 55.

Such tools 51 of the prior art have the disadvantage of being comparably large and, therefore, hard to handle. Furthermore, due to the specific shape of the tool tip 51, namely its bended orientation, in particular its inclined orientation of the distal end relative to the direction being parallel to the vibrational movement, the tool tip 52 is prone for parasitic oscillations, which reduce the efficiency of transferring the vibrational movement from the vibrational source to the distal end of the tool tip 52. Furthermore, the tool 51 for dental treatments as illustrated in figure 1 comprises several interfaces, such as the interface between the horn 53 and the tool tip 52. Such interfaces typically cause that reflection further reduce the efficiency of transferring or transforming the vibrational movement from the vibration source 20 to the oscillation movement of the distal end of the tool tip 52.

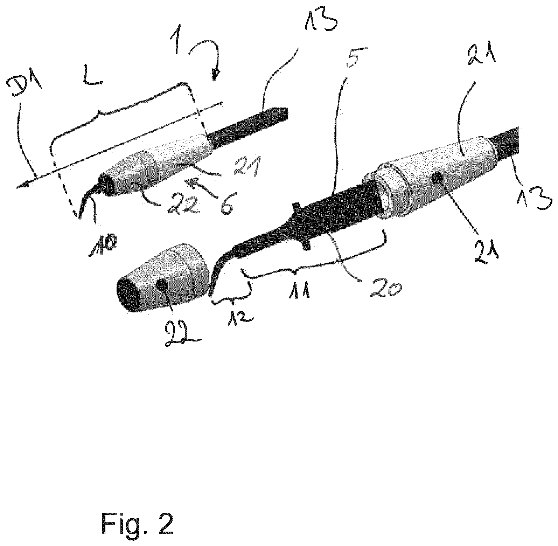

In Figure 2, a tool 1 for dental treatment according to an embodiment of the present invention is illustrated. The tool 1 comprises a tool tip 10, having a first section 11 and a second section 12. The first section 11 extends in a first direction D1, being parallel to the direction of the vibrational movement caused by the vibration source 20. According to the invention, it is provided that the first section 11 is at least partially integrated in the vibration source 20. In particular, the first section 11 is a part of the vibration source 20. Furthermore, it is preferably provided that the first section 11 is at least partially formed by a basic body 5. It turned out by using such a tool tip 10, it is in an advantageous manner possible to decrease a total length L of the handpiece 6, measured in a direction parallel to the first direction D1, which is smaller compared to those total lengths L of tools for dental treatment known from the prior art. Actually, it is possible to realise a tool 1 having a length L in a direction parallel to the first direction D1 which is smaller than 25 cm, preferably smaller than 20cm and more preferably smaller than 15 cm

Such small dimensioned tools 1 simplify handling, in particular, compared to the handpieces 6 known from the prior art. Furthermore, Figure 2 shows that the handpiece 6 comprises a proximal housing part 21 and a distal housing part 22, which are part of the handpiece 6 and surround the tool tip 10 at least partially. In particular, the distal part of the tool tip 10 reaches through a hole or opening at the front side of the distal housing part 22. Furthermore, a supply line 13 is provided to provide energy, in particular, electric energy to the handpiece, in particular to the vibration source as well as cooling water. Furthermore, it is conceivable that the distal housing part 22 includes a light source for illuminating the tooth being treated during the dental treatment.

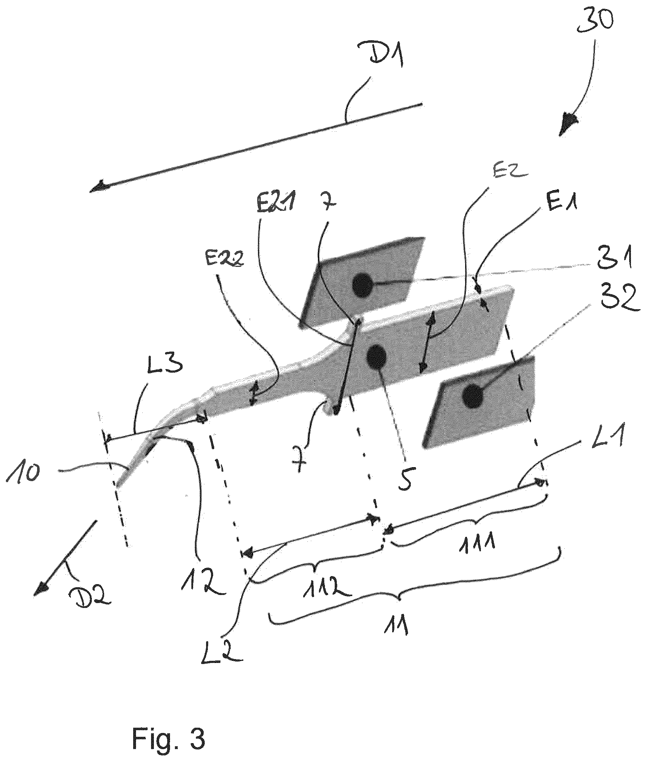

In **Figure 3****,** a transducer 30, as part of the vibration source 20, of the tool 1 of figure 2 is shown in a detailed and exploded view. In particular, it is provided that the transducer 30 includes a first plate 31 and a second plate 32, being orientated to each other in a parallel manner. According to the invention the first subsection 111, being preferably formed as flat basic body 5, is sandwiched between the first plate 31 and the second plate 32 in a direction being perpendicular to a main extension plane of the first plate 31 and the second plate 32. As a consequence, it is possible to activate a d₃₁ transvers mode for causing a vibration movement of the first section 11 along the first direction D1. As a consequence, the tool tip 10 is integrated into the transducer 30, since the tool tip 10 forms a part of the transducer 30, which transforms the electrical energy to a vibrational movement.

Furthermore, it is provided that the tool tip 10 has a first section 11, extending along the first direction D1 and a second section 12, extending along a second direction D2, the second direction D2 being inclined to the first direction D1, preferably, by forming an angle between 100° and 160°, preferably 105° and 140° and more preferably between 110° and 130°. In particular, it is provided that the tool tip 10 is formed by an integral body, the first section 11 merges into the second section 12, wherein the second section 12 is bended relatively to the first direction D1 of the first section 11.

In the embodiment illustrated in figure 3, at least a first section 11 is formed as a flat basic body 5. For forming such a flat basic body 5, it is provided that a cross section of the first section 11, in a plane perpendicular to the first direction D1, has a first extension E1 and a second extension E2 being perpendicular to the first extension E1, wherein a ratio between the first extension E1 to the second extension E2 is smaller than 0.2, preferably smaller than 0.1 and more preferably smaller than 0.05.

Furthermore, it is provided that the first section has a first subsection 111 and a second subsection 112, the first subsection 111 having a second extension E2, being larger than the second extension E2 of the second subsection 112. Thus, a transition section is formed by the part of the first section 11, being preferably located between the first subsection 111 and the second section 12. Preferably, the second extension E2 of the tool tip 10 in the second subsection 112 tapers from a proximal end of the tool tip 10 to a distal end of the tool tip 10.

Furthermore, the tool tip 10 has at least one protrusion 7, which is located between the first subsection 111 and the second subsection 112. The protrusion 7 extends in a direction being parallel to the second extension E2 and increase the second extension E2 of the tool tip 1 in the area of the protrusion 7.

Furthermore, the first subsection 111 has a first length L1 and the second subsection 112 has a second length L2, wherein a ratio between the second length L2 to the first length L1 has a value between 0.75 and 1.25, preferably between 0.9 and 1.1 and more preferably between 0.95 and 1.05. The first length depends on the frequency and has for example a value between 15 mm and 80 mm. For example, the first length is 70 mm for 18 kHz and 20 mm for 60 kHz.

Moreover, the second section 12 of the tool tip 10 has a third length L3, being smaller than the first length L1 and/or the second length L2. It is also provided that the second section 12 is orientated such that the second direction D2 and the second extension E2 of the tool tip 10 extend in a common plane. In particular, the transducer 30, being illustrated in figure 3, shows that it is intended to use such a flat transducer 30 of figure 3 instead of the transducer illustrated in figure 1, namely a Langevin transducer. It turned out that by using such a flat transducer 30, it is possible to reduce the total length L of the tool 1 for dental treatment and to increase the efficiency for transferring or transforming the vibrational movement of the vibration source to the oscillation movement at the distal end of the tool tip 10.

### Reference signs:

- 1, 51: tool
- 5: basic body
- 6: handpiece
- 7: protrusion
- 10, 52: tool tip
- 11: first section
- 12: second section
- 13: supply line
- 20: vibration source
- 21: proximal housing part
- 22: distal housing part
- 30: transducer
- 31: first plate
- 32: second plate
- 53: horn
- 54: housing
- 55: ring-shaped piezo element
- 56: stack
- 111: first subsection
- 112: second subsection
- D1: first direction
- D2: second direction
- L1: first length
- L2: second length
- L3: third length
- L: total length
- E1: first extension
- E2: second extension
- E11: first second extension
- E12: second second extension

## Claims

1. A tool tip (10) for a tool being intended for a dental treatment, in particular for a piezoelectric scaler, comprising
- a first section (11) extending in a first direction (D1) configured to be at least partially integrated into a vibration source for coupling two resonators, and
- a second section (12) extending in a second direction (D2), being configured to form a scaler, the second direction (D2) being inclined relative to the first direction (D1), wherein the first section (11) has at least partially a flat basic body (5), configured to support a planner bending motion in the second section (12) and to increase efficiency of transferring the originally actuated vibration movement to the distal end of a pointed tip of the tool tip (10) in the second section (12), wherein the tool tip (10) is configured to be actuated to a vibration motion having a frequency between 18 kHz and 60 kHz, preferably between 20 kHz and 40 kHz and more preferably between 25 kHz and 35 kHz, **characterized in that** the first section (11) and the second section (12) form an integral body, wherein the first section (11) and the second section (12) origin from the same piece of material and there is no possibility to separate the first section (11) and the second section (12) without destroying the tool tip (10).

2. The tool tip (10) according to one of the preceding claims, wherein a horn is included in the tool tip (10).

3. The tool tip (10) according to one of the preceding claims, wherein a cross section of the flat basic body (5) of the first section (11), in a plane perpendicular to the first direction (D1), has a first extension (E1) and a second extension (E2) perpendicular to the first extension (E1), wherein a ratio between the first extension (E1) to the second extension (E2) is smaller than 0.2, preferably smaller than 0.1 and more preferably smaller than 0.05.

4. The tool tip (10) according to claim 3, wherein the second extension (E2) and the second direction (D2) of the second section (12) are located in the same plane.

5. The tool tip (10) according to one of the preceding claims, wherein the tool tip (10) is made from titanium or stainless steel.

6. The tool tip (10) according to claim 4, wherein the first extension (E1) is essentially constant along the first direction (D1), in particular in a first subsection (111) and/or a second subsection (112).

7. The tool tip (10) according to one of the preceding claims, wherein an angle between the first direction (D1) and the second direction (D2) has a value between 100° and 160° preferably 105° and 140° and more preferably between 110° and 130°.

8. A tool (1) for dental treatment, the tool being a piezoelectric scaler, comprising
- a handpiece (6) having a vibration source (20) having a first piezo element and a second piezo element, and
- the tool tip (10) according to one of the preceding claims., wherein the first section (11) is partially integrated in the vibration source (20) between the first piezo element and the second piezo element, wherein the vibration source (20) comprises a first plate (31) forming the first piezo element and a second plate (32) forming the second piezo element for forming a longitudinal resonator, which actuates the tool tip (10) in the operation status, the first section (11) being at least partially sandwiched between the first plate (31) and the second plate (32)..

9. The tool (1) according to one of the claim 8, wherein the first plate (31) and the second plate (32) are configured to actuate a d₃₁ transverse mode in the longitudinal resonator.

10. The tool (1) according to one of the claims 8 and 9, wherein a length (L) of the tool (1) in a direction parallel to the first direction (D1) is smaller than 25 cm, preferably smaller than 20 cm, and more preferably smaller than 15 cm.

11. The tool (1) according to one of the preceding claims, wherein the first section (11) has a first subsection (111), being located inside the longitudinal resonator in the operation status, and a second subsection (112), being located outside of the longitudinal resonator, wherein a first second extension (E11) of the first subsection (111) is larger than a second extension (E12) of the first subsection (112).

12. The tool (1) according to one of the preceding claims, wherein the tool (1) comprises a control unit, the control unit being configured for controlling the vibrational source, in particular for a closed loop control.

## Patentansprüche

1. Werkzeugspitze (10) für ein zur zahnmedizinischen Behandlung bestimmtes Werkzeug, insbesondere für einen piezoelektrischen Scaler, umfassend
- einen ersten Abschnitt (11), der sich in einer ersten Richtung (D1) erstreckt und so ausgebildet ist, dass er zumindest teilweise in eine Schwingungsquelle zur Kopplung zweier Resonatoren integriert ist, und
- einen zweiten Abschnitt (12), der sich in einer zweiten Richtung (D2) erstreckt und so ausgebildet ist, dass er einen Scaler bildet, wobei die zweite Richtung (D2) relativ zur ersten Richtung (D1) geneigt ist, wobei der erste Abschnitt (11) zumindest teilweise einen flachen Grundkörper (5) aufweist, der so ausgebildet ist, dass er eine planare Biegebewegung im zweiten Abschnitt (12) unterstützt und die Effizienz der Übertragung der ursprünglich betätigten Vibrationsbewegung auf das distale Ende einer zulaufenden Spitze des Werkzeugs (10) im zweiten Abschnitt (12) erhöht, wobei die Werkzeugspitze (10) so ausgebildet ist, dass sie zu einer Vibrationsbewegung mit einer Frequenz zwischen 18 kHz und 60 kHz, vorzugsweise zwischen 20 kHz und 40 kHz und besonders bevorzugt zwischen 25 kHz und 35 kHz, betätigt werden kann, **dadurch gekennzeichnet, dass** der erste Abschnitt (11) und der zweite Abschnitt (12) einen einstückigen Körper bilden, wobei der erste Abschnitt (11) und der zweite Abschnitt (12) aus demselben Materialstück stammen und es keine Möglichkeit gibt, den ersten Abschnitt (11) und den zweiten Abschnitt (12) zu trennen, ohne die Werkzeugspitze (10) zu zerstören.

2. Werkzeugspitze (10) gemäß einem der vorhergehenden Ansprüche, wobei in der Werkzeugspitze (10) ein Horn eingeschlossen ist.

3. Werkzeugspitze (10) gemäß einem der vorhergehenden Ansprüche, wobei ein Querschnitt des flachen Grundkörpers (5) des ersten Abschnitts (11), in einer Ebene senkrecht zur ersten Richtung (D1) eine erste Erstreckung (E1) und eine zweite Erstreckung (E2) senkrecht zur ersten Erstreckung (E1) aufweist, wobei das Verhältnis der ersten Erstreckung (E1) zur zweiten Erstreckung (E2) kleiner als 0,2, bevorzugt kleiner als 0,1 und besonders bevorzugt kleiner als 0,05 ist.

4. Werkzeugspitze (10) gemäß Anspruch 3, wobei die zweite Erstreckung (E2) und die zweite Richtung (D2) des zweiten Abschnitts (12) in derselben Ebene angeordnet sind.

5. Werkzeugspitze (10) gemäß einem der vorhergehenden Ansprüche, wobei die Werkzeugspitze (10) aus Titan oder Edelstahl hergestellt ist.

6. Werkzeugspitze (10) gemäß Anspruch 4, wobei die erste Erstreckung (E1) entlang der ersten Richtung (D1) im Wesentlichen konstant ist, insbesondere in einem ersten Teilabschnitt (111) und/oder einem zweiten Teilabschnitt (112).

7. Werkzeugspitze (10) gemäß einem der vorhergehenden Ansprüche, wobei ein Winkel zwischen der ersten Richtung (D1) und der zweiten Richtung (D2) einen Wert zwischen 100° und 160°, bevorzugt zwischen 105° und 140° und besonders bevorzugt zwischen 110° und 130° aufweist.

8. Werkzeug (1) für eine zahnmedizinische Behandlung, wobei es sich bei dem Werkzeug um einen piezoelektrischen Scaler handelt, umfassend
- ein Handstück (6) mit einer Vibrationsquelle (20), die ein erstes Piezoelement und ein zweites Piezoelement aufweist, und
- die Werkzeugspitze (10) gemäß einem der vorhergehenden Ansprüche, wobei der erste Abschnitt (11) abschnittsweise in die Vibrationsquelle (20) zwischen dem ersten Piezoelement und dem zweiten Piezoelement integriert ist, wobei die Vibrationsquelle (20) eine erste Platte (31), die das erste Piezoelement bildet, und eine zweite Platte (32), die das zweite Piezoelement bildet, umfasst, um einen longitudinalen Resonator zu bilden, der die Werkzeugspitze (10) im Verwendungszustand betätigt, wobei der erste Abschnitt (11) zumindest teilweise zwischen der ersten Platte (31) und der zweiten Platte (32) eingeklemmt ist.

9. Werkzeug (1) gemäß einem der Ansprüche 8, wobei die erste Platte (31) und die zweite Platte (32) so ausgebildet sind, dass sie einen d₃₁-transversalen Modus im longitudinalen Resonator betätigen.

10. Werkzeug (1) gemäß einem der Ansprüche 8 und 9, wobei eine Länge (L) des Werkzeugs (1) in einer Richtung parallel zur ersten Richtung (D1) kleiner als 25 cm, bevorzugt kleiner als 20 cm, und besonders bevorzugt kleiner als 15 cm ist.

11. Werkzeug (1) gemäß einem der vorhergehenden Ansprüche, wobei der erste Abschnitt (11) einen ersten Teilabschnitt (111) aufweist, welcher innerhalb des longitudinalen Resonators im Verwendungszustand angeordnet ist, und einen zweiten Teilabschnitt (112), welcher außerhalb des longitudinalen Resonators angeordnet ist, wobei eine erste zweite Erstreckung (E11) des ersten Teilabschnitts (111) größer ist als eine zweite Erstreckung (E12) des ersten Teilabschnitts (112).

12. Werkzeug (1) gemäß einem der vorhergehenden Ansprüche, wobei das Werkzeug (1) eine Steuereinheit umfasst, wobei die Steuereinheit für die Steuerung der Vibrationsquelle, insbesondere für eine Closed-Loop-Regelung, ausgebildet ist.

## Revendications

1. Pointe d'outil (10) pour un outil utilisé lors d'un traitement dentaire, en particulier pour un détartreur piézoélectrique, comprenant
- une première section (11) s'étendant dans une première direction (D1), conçue pour être au moins partiellement intégrée à une source de vibrations afin de coupler deux résonateurs, et
- une deuxième section (12) s'étendant dans une deuxième direction (D2), conçue pour former un détartreur, la deuxième direction (D2) étant inclinée par rapport à la première direction (D1), sachant que la première section (11) présente, au moins partiellement, un corps de base plat (5) conçu pour supporter un mouvement de flexion en plan dans la deuxième section (12) et pour augmenter l'efficacité du transfert du mouvement vibratoire, initialement généré, vers l'extrémité distale d'une extrémité effilée de la pointe d'outil (10) dans la deuxième section (12), la pointe d'outil (10) étant conçue pour être animée d'un mouvement vibratoire ayant une fréquence comprise entre 18 kHz et 60 kHz, de préférence entre 20 kHz et 40 kHz et, de manière particulièrement préférée, entre 25 kHz et 35 kHz,
**caractérisée en ce que** la première section (11) et la deuxième section (12) forment un corps monobloc, la première section (11) et la deuxième section (12) partent de la même pièce de matériau, et il n'est pas possible de séparer la première section (11) et la deuxième section (12) sans détruire la pointe d'outil (10).

2. Pointe d'outil (10) selon l'une des revendications précédentes,
dans laquelle un pavillon est compris dans la pointe d'outil (10).

3. Pointe d'outil (10) selon l'une des revendications précédentes,
dans laquelle une section transversale du corps de base plat (5) de la première section (11), dans un plan perpendiculaire à la première direction (D1), présente une première extension (E1) et une deuxième extension (E2) perpendiculaire à la première extension (E1), le rapport entre la première extension (E1) et la deuxième extension (E2) étant inférieur à 0,2, de préférence inférieur à 0,1 et, de manière particulièrement préférée, inférieur à 0,05.

4. Pointe d'outil (10) selon la revendication 3,
dans laquelle la deuxième extension (E2) et la deuxième direction (D2) de la deuxième section (12) sont situées dans le même plan.

5. Pointe d'outil (10) selon l'une des revendications précédentes,
dans laquelle la pointe d'outil (10) est réalisée en titane ou en acier inoxydable.

6. Pointe d'outil (10) selon la revendication 4,
dans laquelle la première extension (E1) est sensiblement constante le long de la première direction (D1), en particulier dans une première sous-section (111) et/ou une deuxième sous-section (112).

7. Pointe d'outil (10) selon l'une des revendications précédentes,
dans laquelle l'angle entre la première direction (D1) et la deuxième direction (D2) a une valeur comprise entre 100° et 160°, de préférence entre 105° et 140°, et, de manière particulièrement préférée, entre 110° et 130°.

8. Outil (1) utilisé lors d'un traitement dentaire, ledit outil étant un détartreur piézoélectrique, comprenant
- une pièce à main (6) présentant une source de vibrations (20), comprenant un premier élément piézoélectrique et un deuxième élément piézoélectrique, et
- la pointe d'outil (10) selon l'une des revendications précédentes, sachant que la première section (11) est partiellement intégrée dans la source de vibrations (20) entre le premier élément piézoélectrique et le deuxième élément piézoélectrique, la source de vibrations (20) comprenant une première plaque (31) formant le premier élément piézoélectrique et une deuxième plaque (32) formant le deuxième élément piézoélectrique afin de former un résonateur longitudinal qui actionne la pointe d'outil (10) en état de fonctionnement, la première section (11) étant au moins partiellement prise en sandwich entre la première plaque (31) et la deuxième plaque (32).

9. Outil (1) selon la revendication 8,
dans lequel la première plaque (31) et la deuxième plaque (32) sont conçues pour exciter un mode transversal d₃₁ dans le résonateur longitudinal.

10. Outil (1) selon l'une des revendications 8 et 9,
dans lequel une longueur (L) de l'outil (1) dans une direction parallèle à la première direction (D1) est inférieure à 25 cm, de préférence inférieure à 20 cm, et, de manière particulièrement préférée, inférieure à 15 cm.

11. Outil (1) selon l'une des revendications précédentes,
dans lequel la première section (11) comporte une première sous-section (111), située à l'intérieur du résonateur longitudinal en état de fonctionnement, et une deuxième sous-section (112), située à l'extérieur du résonateur longitudinal, une première extension (E11) de la première sous-section (111) étant plus grande qu'une deuxième extension (E12) de la première sous-section (112).

12. Outil (1) selon l'une des revendications précédentes,
dans lequel l'outil (1) comprend une unité de commande, l'unité de commande étant conçue pour commander la source de vibrations, en particulier pour un asservissement en boucle fermée.
